(19)

Europäisches Patentamt

European Patent Office

Office européen des brevets

(11) **EP 4 209 963 A1**

(12) **EUROPEAN PATENT APPLICATION**

(43) Date of publication:
**12.07.2023 Bulletin 2023/28**

(21) Application number: **22151063.9**

(22) Date of filing: **11.01.2022**

(51) International Patent Classification (IPC):
**G06N 3/00** *(2023.01)* **B60W 30/18** *(2012.01)*
**B60W 60/00** *(2020.01)* **G06N 3/04** *(2023.01)*

(52) Cooperative Patent Classification (CPC):
**G06N 3/047; B60W 30/18163; B60W 60/001;
G06N 3/044; G06N 3/048**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ford Global Technologies, LLC
Dearborn, MI 48126-2701 (US)**

(72) Inventors:
 • **De Cooman, Bram
 3001 Leuven (BE)**

 • **Suykens, Johan
 3001 Leuven (BE)**
 • **Ortseifen, Andreas
 52249 Eschweiler (DE)**
 • **Nageshrao, Subramanya
 San Jose, CA, 95136 (US)**

(74) Representative: **Markowitz, Markus
 Ford-Werke GmbH
 Patentabteilung NH/4L
 Henry-Ford-Straße 1
 50735 Köln (DE)**

Remarks:
Amended claims in accordance with Rule 137(2) EPC.

(54) **METHOD FOR AUTONOMOUS DRIVING OF A VEHICLE, A DATA PROCESSING CIRCUIT, A COMPUTER PROGRAM, AND A COMPUTER-READABLE MEDIUM**

(57)    The present disclosure generally relates to a method for autonomous driving of a vehicle, a data processing circuit, a computer program, and a computer-readable medium. The vehicle comprises at least a sensing device and at least one movement controller configured for influencing a movement of the vehicle if at least one control value is provided to the movement controller. The method comprises at least determining at least one state of the vehicle based on data acquired, with a sensing device, with respect to an environment of the vehicle. The method also comprises determining, using a deep neural network, at least one normalized action for the at least one movement controller of the vehicle based on a bounded activation function. Also, the method comprises mapping the at least one normalized action to at least one control value using a bound extraction function.

Fig. 2

EP 4 209 963 A1

# EP 4 209 963 A1

## Description

## Technical Field

The present disclosure generally relates to a method for autonomous driving of a vehicle, a data processing circuit, a computer program, and a computer-readable medium.

## Background

Reinforcement learning (RL), a branch of machine learning, shows great potential for creating decision making algorithms for highly-automated or autonomous vehicles (also called virtual drivers). In particular, in complex environments where a considerable amount of information has to be taken into consideration, RL shows advantages compared to hand-crafted virtual drivers. Using a RL algorithm, the virtual driver automatically gains an optimal behaviour by interacting with the environment. This optimal behaviour is described by a policy, mapping the agent's perceived state of the environment to actions available to the agent. Gaining an optimal behaviour is achieved on a trial-and-error basis. Spoken differently, based on a perceived state, the agent (virtual driver) chooses an action to be performed in order to achieve an intended goal, such as reaching a predefined destination. The policy is modified by strengthening positive outcomes of a given state-action pair ("training scenario"), whereas negative outcomes are weakened. Thereby, an automatic evolution process leading to improved results is obtained.

In view of the underlying process, reliability must be learned through environmental interactions. However, this may generally lead to potentially unforeseen configurations (traffic scenarios) during training and applications. Constraints, which represent reliability guarantees during driving situations (also called "common sense rules of the road"), are challenging to incorporate in such RL procedures.

One approach to encounter this problem is including a specified controller within the underlying evaluation process. The controller monitors the chosen discrete action and converts the chosen action into a "reliable action". However, this approach requires to consider all possible action spaces. In other words, for all possible measures to influence a movement of the vehicle reliable constraints need to be specified. Thus, this approach leads to complex regulation scenarios, if even all possible "undesired" actions can be pre-identified at all.

Another approach includes optimizing the "action to be executed" at every timestep by applying an additional optimization procedure and, optionally, including further conditions such as single constraints being active at each time. In other words, a secondary evaluation process is applied with regard to underlying reliability aspects. Although this approach may also be applied to continuous actions, the approach causes high computational effort and is, generally, not feasible in automotive applications where computing resources are limited.

Some alternative approaches prune the available action set such that "undesired" actions are excluded. This can either be achieved in a pre-processing step, before the agent decides on the actions, or in a post-processing step, after the agent has already made a decision. In the latter case, the actions are assigned different priority levels and the action being reliable and having highest priority is chosen to be executed.

Relevant prior art to be mentioned are publications US 9,977,430 B2, CN 106157650 A, CN 110562258 A and CN 109598934 A.

However, all prior art approaches are based on including artificial reliability constraints such that the action spaces are limited. Therefore, the "undesired" actions need to be identified first and certain measures to react on such actions need to be included which is computationally expensive.

Accordingly, there exists a need for providing a method for autonomous driving of a vehicle, a data processing circuit, a computer program, and a computer-readable medium, which allow artificial constraints to be omitted, preferably also during the training phase.

The subject matter according to the independent claims serves the respective need. Additional embodiments are indicated within the dependent claims and the following description, each of which, individually or in combination, may represent aspects of the disclosure. Some aspects of the present disclosure are presented with regard to methods, others with regard to respective devices. However, the features are correspondingly to be transferred vice versa.

A summary of certain embodiments disclosed herein is set forth below. It should be understood that these aspects are presented merely to provide a brief summary of these embodiments and that these aspects are not intended to limit the scope of this disclosure. This disclosure may encompass a variety of aspects that may not be set forth below.

According to an aspect, a method for autonomous driving of a vehicle is provided. The vehicle comprises at least one sensing device and at least one movement controller. The movement controller is configured for influencing a movement of the vehicle if at least one control value (denoted: a) is provided to the movement controller. The method comprises at least the steps of:

S1      determining at least one state (denoted: s) of the vehicle based at least on data acquired, with a sensing device, with respect to an environment of the vehicle;

S2    determining, using a deep neural network, at least one normalized action (denoted: $\tilde{a}$) for the at least one movement controller of the vehicle based on a bounded activation function. The bounded activation function is configured to limit the at least one normalized action ($\tilde{a}$) with respect to the at least one state ($s$) of the vehicle; and

S3    mapping the at least one normalized action ($\tilde{a}$) to at least one control value ($a$) using a bound extraction function. The bound extraction function is configured to provide at least one upper bound and at least one lower bound based on the state ($s$) of the vehicle to limit the at least one control value ($a$) such that a movement of the vehicle upon providing the at least one control value ($a$) to the at least one movement controller of the vehicle is limited.

In general, the deep neural network consists of a large number of connected neurons organized in layers. Deep neural networks allow features to be learned automatically from training examples. In this regard, a neural network is considered to be "deep" if it has an input and output layer and at least one hidden middle layer. Each node is calculated from the weighted inputs from multiple nodes in the previous layer. Put differently, during learning, the virtual driver (autonomous vehicle) follows a randomly initialized policy $\pi(s; \theta_\mu)$ describing the mechanism of the deep neural network. Here, ($s$) describes the determined state of the vehicle and $\theta_\mu$ describes the weights of all neurons between the corresponding input and output signals of the specific neuron. Put differently, $\pi(s; \theta_\mu)$ describes a specific mapping policy from the determined state ($s$) to a normalized output action ($\tilde{a}$) for the at least one movement controller of the vehicle. Consequently, the normalized action ($\tilde{a}$) will be limited to a predefined interval based on the policy $\pi(s; \theta_\mu)$. The bound extraction function which is depending on bounds determined by the state ($s$) of the vehicle serves to rescale the predefined interval with regard to the control value ($a$). In particular, the control value ($a$) represents the quantity which may be provided to the at least one movement controller to influence a movement of the vehicle. By rescaling the predefined interval, the movement of the vehicle is limited to a range such that unwanted movements of the vehicle are avoided. These unwanted movements may be considered by extracting appropriate bounds of the state ($s$) of the vehicle. This is achieved as the state ($s$) not only includes information with respect to the ego vehicle (here "ego" denotes the vehicle under inspection) but also information with regard to the general traffic scenario which the ego vehicle encounters. As an example, based on information included in the state ($s$) lower and upper bounds may be determined as the data acquired in view of the environment of the vehicle may indicate that specific movements of the vehicle are to be excluded in order to avoid "undesired" actions. The accordingly determined control values ($a$) based on which the vehicle's movement is influenced, thus, automatically respect user-defined conditions to allow "reliable" actions only.

Put differently, in view of the architecture of the present method, the reliability aspects are automatically taken into account. The specific architecture enforces the virtual driver to stay within certain predefined state-dependent bounds during training as well as during regular operation. Manually applying reliability procedures, such as reliability controllers or the like, based on prior domain knowledge to ensure reliability throughout the learning phase may be avoided. Also, no prioritization processes need to be applied. Furthermore, "undesired" actions of the vehicle do not need to be pre-identified *per se* before the method is applied. In contrast, relative conditions may be included when determining the state ($s$) which automatically propagate into the procedures of determining the normalized action ($\tilde{a}$) as well as determining the control value ($a$) based on which the movement of the vehicle is finally influenced.

Since the relative reliability measures are anchored within the architecture of the deep neural network itself, it can be unquestionably shown that the relative reliability aspects are respected also after having finished the training procedure. This is particularly advantageous in view of potential situations (states ($s$) of the vehicle relative to its environment) which have not been encountered during the learning process.

Within the present context the at least one sensing device may be considered a device configured to acquire data to determine the state ($s$) of the ego vehicle with regard to the environment and the state ($s$) of the vehicle with regard to other vehicles arranged within an environment of the ego vehicle in at least one aspect. For example, a sensing device may be considered a camera, a light detection and ranging (LiDaR) device, a radio detection and ranging (radar) device, a global navigation satellite system (GNSS) device, a proximity, a ultrasonic sensor device or the like. The sensing device may be configured to register, identify and interpret the surrounding with respect to the ego vehicle.

Within the present context a movement controller may be considered to represent an actuator, an engine, or a device configured to influence a movement of the vehicle under inspection (ego vehicle). For example, the movement controller may be a steering system configured to change a direction of the motion of the vehicle. In particular, a control value ($a$) may be provided to the movement controller as a measure to specify how the movement of the vehicle is to be influenced. The movement controller may then accordingly adapt the motion of the vehicle. In contrast, the normalized action ($\tilde{a}$) rather specifies a higher-level measure how a particular goal may be achieved, such as reaching a specified destination. Whereas the normalized action ($\tilde{a}$) may represent the command "lane change", the control value ($a$) may be considered to precisely determine how the steering device should react.

Within the present context a vehicle may be considered a device configured for transporting objects, cargo, or people between different destinations. Exemplary vehicles include land-based vehicles such as cars or the like, railed vehicles, aircraft, or watercraft. Preferably, vehicles may be considered road-based vehicles within the present context, such as cars, trucks, buses, or the like.

In some embodiments, the method may further comprise the step of determining a reliable exploration regime for the deep neural network based on at least a continuous probability distribution. The continuous probability distribution can be determined taking into account the at least one upper bound and the at least one lower bound provided by the bound extraction function.

In particular, the continuous distribution may represent a Gaussian distribution, a Poisson distribution or the like, preferably a Gaussian distribution.

Also, in some embodiments the method may further comprise the step of training the deep neural network using at least one reinforcement learning (RL) algorithm including associated data based on the reliable exploration regime. The associated data may comprise the at least one determined state (s) of the vehicle and the at least one determined normalized action (ã) for the at least one movement controller of the vehicle dependent thereon. In an alternative, the associated data may comprise the at least one determined state (s) of the vehicle and the at least one determined control value (a) dependent thereon.

In this regard, the RL procedure is based on a reward system. Based on the determined normalized action (ã) associated to the underlying state (s) of the vehicle, i.e. based on the state-action pair, the virtual driver will receive a certain reward r(s, ã). This rewarding system is used to update and improve the mapping policy of the weights describing the intrinsic neuronal interactions of the deep neural network by repeatedly running state-action pairs (s, ã).

Furthermore, in order to explore new, potentially more efficient strategies, possibly leading to an improved policy $\pi(s; \theta_\mu)$, the virtual driver will also repeatedly deviate from the current policy and randomly try out new actions (ã). The details on how the parameter vector $\theta_\mu$ of the policy is modified depends on the chosen RL algorithm.

In this regard, the present method provides a reliable exploration regime for the underlying RL algorithm. This reliable exploration regime is determined based on a continuous probability distribution which naturally allows for deviations from the nominal normalized action (ã) of the underlying state-action pair (the associated data as specified before). However, the reliable exploration regime ensures that the RL algorithm, when optimizing the policy of the deep neural network, deviates from the nominal normalized actions (ã) only insofar as the bounds limit the reliable exploration regime. Since the bounds of the reliable exploration regime are determined by lower and upper bounds provided by the bound extraction function, which directly depends on the state (s) of the vehicle, the relative limits of a movement of the vehicle are inherently considered within the exploration procedure. Thereby, a procedure is provided which enables to deviate from a nominal normalized action (ã) within specific bounds depending at least in part on the environment of the vehicle such that unwanted "undesired" movements of the vehicle are automatically avoided. This intrinsic reliability measure is anchored within the learning process itself. The mapping policy is updated and an optimized policy $\pi(\check{s}; \theta_\mu)$ is achieved. Therefore, an unwanted exploration is avoided during the learning phase as well as during application of the so-trained deep neural network. The need to manually consider reliability policies may advantageously be avoided. Also, no reliability controller or prioritization process needs to be applied.

Moreover, the present training procedure is not dependent on a specific RL algorithm. It only requires the usage of an explicit actor network, which is the case for all policy-based or actor-critic methods.

If the bound extraction function is differentiable with respect to the underlying normalized action (ã), the associated data may also comprise the state (s) and the at least one determined control value (a) dependent thereon.

In some embodiments, the method may also comprise the step of acquiring, with the sensing device, data with respect to the environment of the vehicle. Also, the method may comprise the step of acquiring, with the sensing device, data of vehicles arranged within an environment of the vehicle and relative thereto. Moreover, the method may comprise the step of determining the at least one state (s) of the vehicle based on at least the data acquired with respect to the environment of the vehicle and data acquired with respect to vehicles arranged within the environment of the vehicle and relative thereto.

Put differently, the state (s) of the vehicle may not only describe properties of the vehicle itself but also include specific properties of vehicles arranged within an environment of the vehicle. To achieve this, a sensing device may be applied to acquire properties of the vehicle with regard to an environment. For example, a velocity and a position or the like of the vehicle may be sensed. However, this information only describes properties of the vehicle itself. It at least partially neglects the current traffic scenario which is usually strongly dependent on other traffic participants. Hence, within the environment of the ego vehicle, data of other vehicles may be sensed using the sensing device. Usually, the data will be acquired simultaneously. Since the ego vehicle is under inspection, the data of other vehicles are commonly acquired with respect to the ego vehicle. For example, relative positions and velocities may be determined. Based on both sets of information a state (s) of the ego vehicle is determinable. Accordingly, the state (s) not only describes the traffic situation of the ego vehicle itself but also describes other vehicle arranged within an environment of the ego vehicle.

Optionally, the state (s) of the ego vehicle may be normalized to provide a normalized state (š). For example, it may be considered that only a limited number of neighboring vehicles or data acquired with regard to vehicles arranged according to a limited environment may be needed to be included when appropriately describing the ego vehicle. Therefore, a normalized state (š) may be determined which is advantageous since the computational expenses may be reduced. For example, for determining an action of the ego vehicle it may be omitted if a vehicle is arranged four lanes left of the ego vehicle. Also, other vehicles being arranged at large distances relative to the ego vehicle may potentially be omitted. After having determined the normalized state (š), this information may be provided to the deep neural network to determine the normalized action (ã). Since the normalized state (š) includes a smaller amount of information the stability of the determination procedure may be improved.

In view of the information included in the state (s), bounds for limiting a movement of the vehicle may be appropriately extracted thereof. Hence, the bounds may ensure that unwanted movements of the ego vehicle are avoided. In this regard, the bound exploration function is applied within the present method. Consequently, also the control value (a) may include the respective bounds.

Optionally, the environment of the ego vehicle may be predefined. For example, the environment may comprise a certain area surrounding the ego vehicle, such as a certain number of lanes adjacent to the lane of the ego vehicle. Furthermore, the environment may include a certain range in front and behind the ego vehicle with respect to a driving direction. Thus, the environment provides a simple measure to adapt the virtual driver to realistic circumstances. The environment may also be different based on the general traffic scenario. For example, a highway traffic scenario may require a first environment with respect to the ego vehicle while an inner-city traffic scenario may require a different environment to reflect realistic circumstances.

Optionally, different sensing devices may be applied when acquiring data with respect to the ego vehicle and other vehicles. For example, whereas the velocity of the (ego) vehicle may be sensed based on a GNSS device, a LiDaR device may be applied to sense the relative position and velocity of other vehicles.

In some embodiments the method may also comprise the step of determining at least one speed setpoint and/or position setpoint for the at least one movement controller of the vehicle based on the determined state (s) of the vehicle.

Since the state (s) of the vehicle also includes information of other vehicles arranged within the vehicle's environment, the setpoint(s) may be determined to correspondingly consider such information. Thus, a lane change may be prevented if the state (s) shows that additional vehicles are laterally arranged next to the ego vehicle. Also, a speed of another vehicle moving in front of the ego vehicle may be considered such that a reduction of a distance between the vehicles is avoided by appropriately determining the speed setpoint.

The speed setpoint may refer to a longitudinal speed setpoint, such as according to a forward or rearward motion of the vehicle. The position setpoint may refer to a lateral position setpoint for the at least one movement controller of the vehicle. For example, the lateral position may relate to a relative position with regard to a lane of the vehicle or with regard to structural limits of the underlying pathway.

Optionally, a setpoint may be determined taking into account at least one information regarding a destination information of the vehicle.

In some embodiments, the at least one speed setpoint may be determined based on a threat assessment algorithm to be limited between a lower bound speed setpoint and an upper bound speed setpoint. Alternatively or cumulatively, the at least one setpoint for a position of the vehicle may be determined based on the threat assessment algorithm to be limited between a lower bound position setpoint and an upper bound position setpoint. The threat assessment algorithm may include conditions to limit the setpoints with regard to lower and upper bounds. For example, the threat assessment algorithm may consider that a lane change towards a neighboring lane of the ego vehicle may not be performed if another vehicle is approaching this area. In this case, the bound may be set such that the position setpoint is excluded from this area. Advantageously, the lower bound and upper bounds setpoints are determined based on the state (s) of the vehicle. In other words, the bounds are determined relative to the ego vehicle.

Optionally, the lower bound speed setpoint may be zero. The upper bound speed setpoint may be based on a velocity difference and a gap between the vehicle and a nearest vehicle located in front of the vehicle. A lower bound position setpoint may be based on a minimum available lateral clearance with respect to the vehicle. In this regard, the minimum available lateral clearance may be determined taking data into account being acquired with respect to vehicles arranged within the environment of the vehicle and relative thereto. Based on these aspects, "common sense rules of the road" may be easily included by limiting the setpoint(s) accordingly.

At least steps S1 to S3 of the above-described method may be performed computer-implemented.

According to another aspect, a data processing circuit comprising means for carrying out at least the steps S1 to S3 of the above-described method is provided.

According to even a further aspect, a computer program comprising instructions which, when the program is executed by a computer, cause the computer to carry out at least the steps S1 to S3 of the above-described method is provided.

According to yet even another aspect, a computer-readable medium comprising instructions which, when executed by a computer, cause the computer to carry out at least the steps S1 to S3 of the above-described method is provided.

According to still another aspect, an autonomous driving system for a vehicle is provided. The autonomous driving system comprises at least one sensing device, at least one movement controller, and at least one data processing circuit. The data processing circuit is coupled to the at least one sensing device and the at least one movement controller. The at least one movement controller is configured for influencing a movement of the vehicle if at least one control value (a) is provided thereto. The at least one sensing device is configured to acquire data with respect to an environment of the vehicle. The data processing circuit is configured to carry out at least the steps S1 to S3 of the above-described method. For example, the at least one movement controller may also comprise control and servo units configured to autonomously drive the vehicle.

## BRIEF DESCRIPTION OF THE DRAWINGS

The foregoing aspects and further advantages of the claimed subject matter will become more readily appreciated, as the same become better understood by reference to the following detailed description when taken in conjunction with the accompanying drawings.

In the drawings,

- Fig. 1 is a schematic drawing of a method for autonomous driving of a vehicle according to some embodiments;

- Fig. 2 is a schematic drawing of the bounded actor architecture and the bounded exploration sampling;

- Fig. 3 is a schematic drawing of a vehicle and its environment;

- Fig. 4 is a schematic drawing of a deep neural network;

- Fig. 5 is a schematic drawing of the bounds depending on the environment of the vehicle;

- Fig. 6 is a schematic drawing of the high-level feedback control system of an autonomous vehicle; and

- Fig. 7 is a schematic drawing of a vehicle comprising an autonomous driving system.

## DETAILED DESCRIPTION

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed. Various modifications to the described embodiments will be readily apparent to those skilled in the art, and the general principles defined herein may be applied to other embodiments and applications without departing from the spirit and scope of the described embodiments. Thus, the described embodiments are not limited to the embodiments shown but are to be accorded the widest scope consistent with the principles and features disclosed herein.

All of the features disclosed hereinafter with respect to the example embodiments and/or the accompanying figures can alone or in any sub-combination be combined with features of the aspects of the present disclosure including features of preferred embodiments thereof, provided the resulting feature combination is reasonable to a person skilled in the art.

For the purposes of the present disclosure, the phrase "at least one of A, B, and C", for example, means (A), (B), (C), (A and B), (A and C), (B and C), or (A, B, and C), including all further possible permutations when greater than three elements are listed. In other words, the term "at least one of A and B" generally means "A and/or B", namely "A" alone, "B" alone or "A and B".

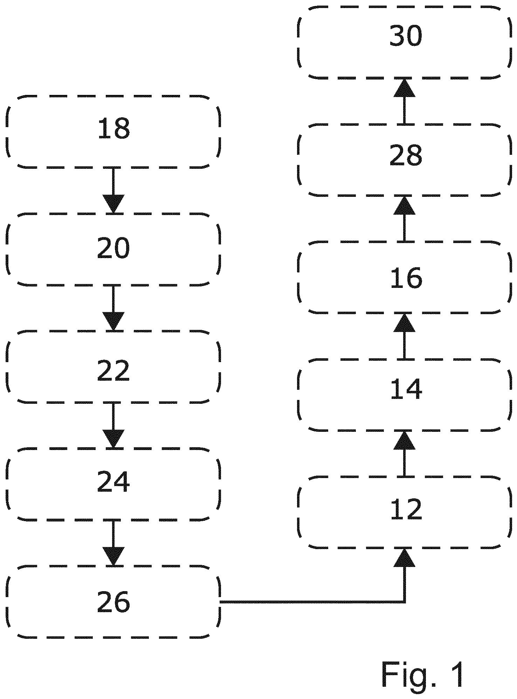

Figure 1 is a schematic drawing of a method 10 for autonomous driving of a vehicle according to some embodiments. The method comprises mandatory and optional steps. Optional steps are shown in dashed lines and may individually or in (sub)combinations be combined with the mandatory steps of the method 10.

The method 10 for autonomous driving a vehicle comprises the step 12 of determining at least one state (s) of the vehicle based at least on data acquired, with a sensing device, with respect to an environment of the vehicle. Accordingly, the state (s) of the vehicle characterizes the vehicle with regard to both, intrinsic properties determined by the vehicle itself and properties of the vehicle with respect to its environment as well as other objects arranged therein.

Subsequently, the method 10 comprises the step 14 of determining, using a deep neural network, at least one normalized action (ã) for at least one movement controller of the vehicle based on a bounded activation function. Thereby, the bounded activation function is configured to limit the at least one normalized action (ã) with respect to the at least one state (s) of the vehicle. The movement controller represents a device configured to influence a movement of the vehicle, such as an actuator. The normalized action (ã) represents a measure depending on the state (s) based on which a desired goal is sought to be achieved, such as reaching a specified destination. Since the state (s) of the vehicle comprises information with respect to the environment of the vehicle as well, intrinsic limitations for the normalized action (ã) are automatically provided in this regard. For example, the state (s) may comprise the information that only a single lane is arranged left of the vehicle. Therefore, a normalized action (ã) indicating a double-lane change to the left may be excluded from the available action space when determining the normalized action (ã).

Also, the method 10 comprises the step 16 of mapping the at least one normalized action (ã) to at least one control value (a) using a bound extraction function. The bound extraction function is configured to provide at least one upper bound and at least one lower bound based on the state (s) of the vehicle to limit the at least one control value (a) such that a movement of the vehicle upon providing the at least one control value (a) to the at least one movement controller of the vehicle is limited. Generally, based on the control value (a) the movement controller may cause a change of the movement of the vehicle. However, the bound extraction function may analyze the state (s) of the vehicle and extract certain bounds. These bounds may be applied to limit the available value space of the control value (a). For example, the state (s) may comprise the information that a lane change to the left of the vehicle may generally be possible as the underlying pathway provides for this lane. However, the state (s) may also comprise information of an additional car occupying the next but one lane relative to the ego vehicle. Accordingly, the actual lane change should be performed with increased care and at smaller lateral speeds. Therefore, the available value space of the control value (a) may be limited for reliability reasons. Therefore, the bounds determined based on the state (s) may be determined such that the control value (a) is limited.

Accordingly, the method 10 provides for a reliable autonomous driving of the vehicle in view of the inherent structure of the underlying bounded actor architecture. Reliable handling of the vehicle is achieved during the training phase as well as during application of the underlying deep neural network. Manually including artificial reliability rules, reliability controllers or prioritization processes may be avoided. The computational expenses are advantageously reduced compared to prior art approaches.

The method 10 may be further developed by the following optional steps.

The method 10 may comprise the optional step 18 of acquiring, with the sensing device, data with respect to the environment of the ego vehicle.

Furthermore, the method 10 may comprise the optional step 20 of acquiring, with the sensing device, data of vehicles arranged within an environment of the vehicle and relative thereto. Optionally, steps 18 and 20 may be performed simultaneously.

Also, the method 10 may comprise the optional step 22 of determining at least one state (s) of the vehicle based on at least the data acquired with respect to the environment of the vehicle and data acquired with respect to vehicles arranged within the environment of the vehicle and relative thereto. Accordingly, the state (s) not only comprises information with regard to the ego vehicle but as well with regard to other vehicles. In some examples, the state (s) may comprise information such as the vehicle's own position and velocity on the road, distances towards the nearest lane centers and road edges, lateral and longitudinal distances to other vehicles on the road, and lateral and longitudinal relative velocities of the other vehicles with respect to the ego vehicle.

Moreover, the method 10 may comprise the optional step 24 of determining at least one normalized state (š) of the vehicle. Compared to the state (s) of the ego vehicle, the normalized state (š) may omit certain information. For example, information of vehicles may be omitted if additional vehicles are arranged in between or if these vehicles are arranged at large distances. Hence, a reduction of the computational expenses may be achieved. Optionally, step 22 may be omitted and a normalized state (š) of the vehicle may be determined only.

Subsequently, the method 10 may comprise the optional step 26 of determining at least one speed setpoint and/or position setpoint for the at least one movement controller of the vehicle based on the determined state (s) of the vehicle. The setpoint may be determined so as to generally achieve a higher-level goal, such as reaching a predefined destination. As the state (s) comprises information with regard to other vehicles as well, it becomes obvious that the setpoints may need to be chosen such that unwanted "undesired" changes of the movement of the ego vehicle are prevented. Accordingly, the setpoints correspondingly include the underlying information such that specific bounds are considered. Since the bounds are included when determining the control value (a), the actions are accordingly limited so as to avoid "undesired" traffic configurations.

Optionally, the method 10 may also comprise the step 28 of determining a reliable exploration regime for the deep neural network based on at least a continuous probability distribution. Here, the continuous probability distribution is determined taking into account the at least one upper bound and the at least one lower bound provided by the bound extraction function. Training of a deep neural network is usually performed on a trial-and-error basis following new routes for achieving a desired goal. In this regard, the deep neural network may follow new outcomes originally not having been subject of the method in view of the mapping policy representing the input-output weights of the neurons of the network.

Put differently, the deep neural network may slightly deviate from the determined course of action to explore whether the deviation leads to even improved results. For providing such a reliable exploration regime, a probability distribution may be applied which enables deviations at certain probabilities. In this regard, the bounds determined by the state (s) of the vehicle are taken into account to prevent deviations which may cause unwanted "undesired" actions.

Accordingly, the method 10 may comprise the optional step 30 of training the deep neural network using at least one RL algorithm including associated data based on the reliable exploration regime. The associated data comprises the at least one determined state (s) of the vehicle and the at least one determined normalized action (ã) for the at least one movement controller of the vehicle dependent thereon. Alternatively, the associated data comprises the at least one determined state (s) of the vehicle and the at least one determined control value (a) dependent thereon. The RL algorithm explores the mapping policy specifying the weights of the neurons within the deep neural network on a trial-and-error approach using a reward system. Accordingly, positive results are automatically strengthened, whereas negative results are weakened. Thus, the mapping policy is automatically adapted and optimized.

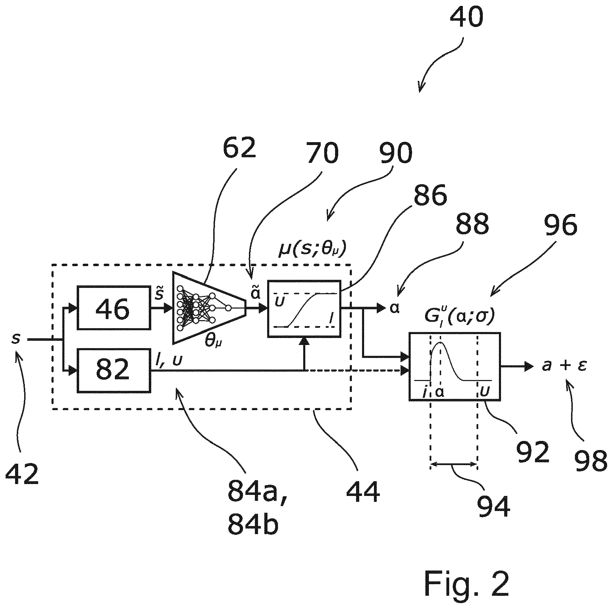

Figure 2 is a schematic drawing 40 of the bounded actor architecture 44 and the bounded exploration sampling 82.

The state (s) 42 of the vehicle with respect to the environment and other vehicles arranged therein is determined based on data sensed by at least one sensing device. The state (s) 42 of the vehicle is provided as an input into the bounded actor architecture 44. One branch of the bounded actor architecture 44 comprises then the subsequent determination of the normalized state (š) 46 of the vehicle by neglecting certain information if possible.

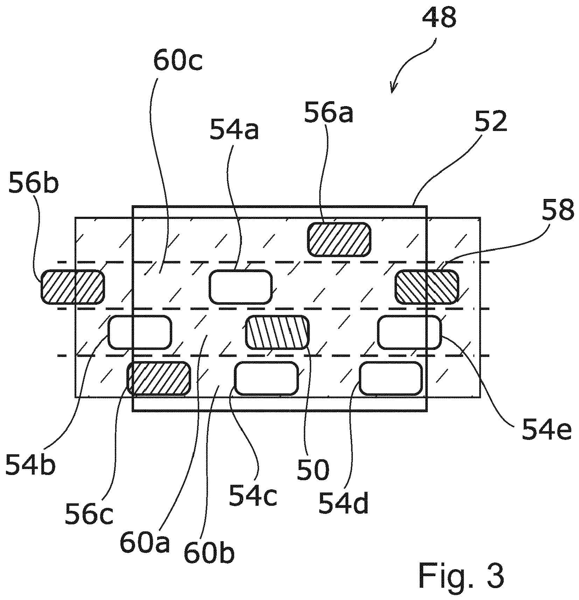

In this regard, figure 3 is a schematic drawing 48 of a vehicle 50 and its environment 52. The environment 52 may be predefined according to a threat assessment algorithm. For example, dimensions of the environment 52 relative to the ego vehicle 50 may be predefined to achieve a compromise between computational expenses and potential threats in view of the traffic situation.

When determining the state (s) 42 of the vehicle other vehicles 54A to 54E, 56A, 56B arranged within the environment 52 are sensed as well to determine their relative positions, velocities and so forth with respect to the ego vehicle 50. For example, as vehicle 56C is arranged outside the environment 52, data of that vehicle will not be included within the state (s) 42. Furthermore, additional conditions may be taken into account such as omitting all but the neighboring five vehicles 54A to 54E arranged next to the ego vehicle 50 when determining the normalized state (š) 46 to further reduce computational expenses. Naturally, unwanted "undesired" traffic situations may primarily occur in view of the neighboring vehicles 54A to 54E being arranged closest to the ego vehicle 50. Hence, in this example, vehicles 56A, 56B are omitted when determining the normalized state (š) 46. Since the state (s) 42 of the vehicle 50 with respect to its environment already comprises information with regard to the general traffic situation, such as the lane configuration of the lanes 60A to 60C, this information is included in the normalized state (š) 46 of the vehicle 50 as well.

Optionally, if no vehicles are arranged within the environment 52 with respect to the ego vehicle 50, a ghost vehicle 58 may be considered within the state (s) 42 for computational reasons. The ghost vehicle 58 may be considered a reference vehicle traveling at the maximum allowed speed at a maximum distance defined by the environment 52. Then, the ghost vehicle 58 may be used in comparison procedures to identify relevant vehicles 54, 56.

Within the bounded actor architecture 44, the normalized state (š) 46 is subsequently applied to the deep neural network 62.

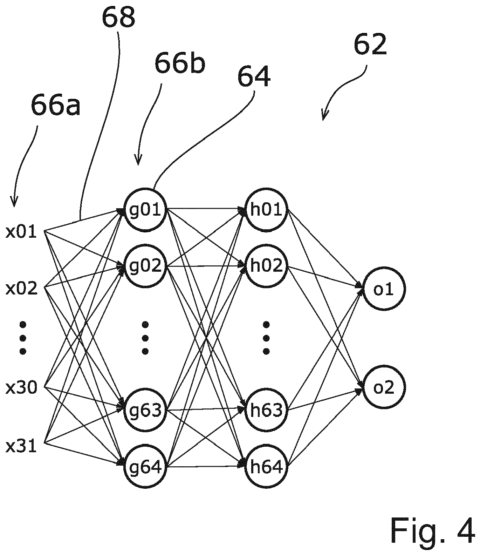

A general structure of the deep neural network is shown in figure 4. The deep neural network 62 comprises multiple neurons 64 arranged in adjacent layers 66A, 66B. The neurons 64 have one output $y$ and several inputs $u_1, ... , u_m$. Lines 68 represent the probabilities between the different neuron connections which may also be considered weights of a mapping policy described by the activation function f. In other words, the output is generally determined by $y = f(w_1 u_1 + w_2 u_2 + ... + w_m u_m)$. This means, that the various weights $w_i$ are summed as a superposition such that the value of $y$ is determined by the non-linear activation function $f$.

Since the normalized state (š) 46 is used as input for the deep neural network 62, the action (ã) 70 determined using the deep neural network 62 is normalized as well. In other words, since the normalized state (š) 46 already comprises information based on which the available space of the determined normalized actions (ã) 70 is limited (e.g. lane configuration), the specific mapping policy $\pi(s; \theta_\mu)$ of the present procedure represents a bounded activation function. Here, $\theta_\mu$ represents a parameter vector comprising all weights of the neurons 64 included in the underlying deep neural network 62.

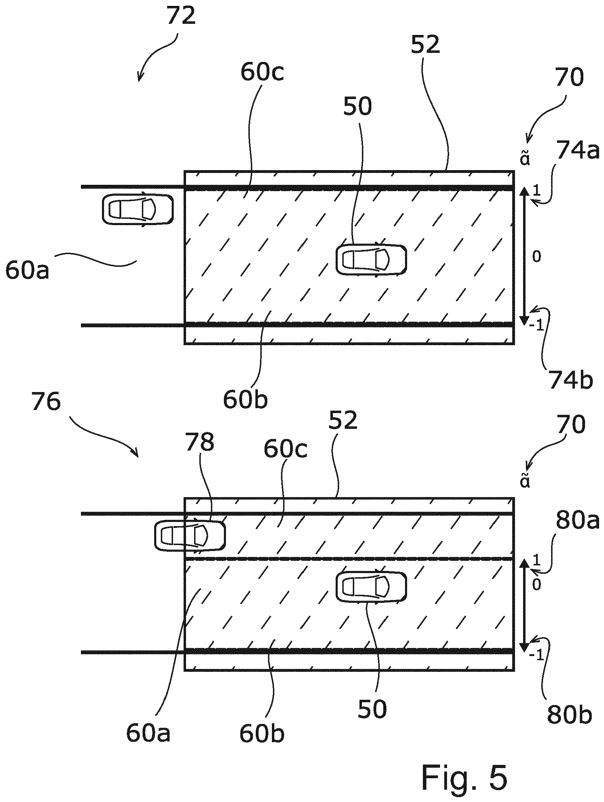

Figure 5 is a schematic drawing of the bounds depending on the environment 52 of the vehicle 50.

In a first configuration 72, the environment 52 of the vehicle 50 is free of other vehicles. Accordingly, the upper bound 74A of the normalized action (ã) 70 is +1, wherein the lower bound 74B of the normalized action (ã) 70 is -1. In other words, the entire lateral range of the environment 52 is available for the mapping procedure based on which the normalized action (ã) 70 is determined using the deep neural network 62.

In a second configuration 76, an additional vehicle 78 entered the environment 52 of the ego vehicle 50. Therefore, a lane change of the vehicle 50 from the center lane 60A to the left neighboring lane 60C is not possible anymore. Accordingly, the upper and lower bounds 80A, 80B of the normalized action (ã) 70 are adapted.

Since the state (s) 42 comprises information with regard to the environment 52 of the vehicle 50, the normalized action (ã) 70 is determined such that appropriate bounds are automatically considered during the mapping procedure.

A second branch of the bounded actor architecture 44 is applied to extract lower and upper bounds based on the state (s) 42 of the vehicle as perceived by the sensing device (see figure 2). In this regard, the bound extraction function 82 is applied to determine lower and upper bounds $B_l(s), B_u(s)$ 84A, 84B with respect to the state (s) 42 of the ego vehicle 50 such that "undesired" actions are avoided. Here, the actual traffic situation is considered and based on the information included in the state (s) 42 certain relative actions are prevented, such as a specific lane change procedure if that lane is occupied. Determination of the lower and upper bounds $B_l(s), B_u(s)$ 84A, 84B is enabled since the state (s) 42 comprises information with regard to the ego vehicle 50 as well as with regard to neighboring vehicles 54A to 54E, 56A to 56C. Note, that for improved readability, lower and upper bounds $B_l(s), B_u(s)$ 74A, 74B are denoted $l$ and $u$ in figure 2.

The extracted bounds $B_l(s), B_u(s)$ 84A, 84B are subsequently used to rescale the normalized action (ã) 70 utilizing a mapping procedure 86 for determining the control value (a) 88. Since the extracted bounds $B_l(s), B_u(s)$ 84A, 84B are included when determining the control value (a) 88, the actions are accordingly limited so as to avoid "undesired" traffic configurations. The control value (a) 88 depicts the quantity which may be provided to the movement controller in order to adapt a motion of the vehicle 50. The overall dependency of the control value (a) 88 in view of the vehicle's perceived state (s) 42 and the parameter vector $\theta_\mu$ describing the weight distribution within the deep neural network 62 may be expressed using the transfer function $\mu(s; \theta_\mu)$. Consequently, the determined control value (a) 88 not only depends on the weight distribution $\theta_\mu$ of the deep neural network 62, but as well on the perceived state (s) 42 of the vehicle 50 as well as on the lower and upper bounds $B_l(s), B_u(s)$ 84A, 84B extracting by applying the bound extraction function 82.

In this regard, the mapping procedure for determining the control value (a) 88 may be based on specific functions $R_1, R_2$ which depend on the extracted bounds $B_l(s), B_u(s)$ 84A, 84B, such as:

$$a = R_1(s, \tilde{a}) = B_l(s) + (B_u(s) - B_l(s))/(\tilde{a}_{up} - \tilde{a}_{lo}) \cdot (\tilde{a}_{lo} + \tilde{a})$$

or:

$$a = R_2(s, \tilde{a}) = \begin{cases} \dfrac{B_l(s)}{\tilde{a}_{lo}} \cdot \tilde{a} & \text{if } \tilde{a} < 0 \\ \dfrac{B_u(s)}{\tilde{a}_{up}} \cdot \tilde{a} & \text{if } \tilde{a} \geq 0 \end{cases}$$

Here, $l$ and $u$ are used to denote the extracted lower and upper bounds $B_l(s), B_u(s)$ 84A, 84B as extracted by the bound extraction function 82. The rescaling function $R_1$ is more general and allows any range $[a_l; a_u]$ for the normalized action (ã) 70, whereas the second rescaling function $R_2$ assumes a negative lower bound and a positive upper bound (more suitable for relative actions).

In addition, the bounded exploration sampling 92 is provided to enable reinforcement learning to be applied. Based on the lower and upper bounds $B_l(s), B_u(s)$ 84A, 84B, a reliable exploration regime 94 is determined by applying a continuous probability distribution function $G_l^u(a, \sigma)$ 96. Here, the distribution function 96 is of a Gaussian type. Within the range defined by the reliable exploration regime 94, the reinforcement learning may deviate from the originally determined control value (a) 88, such as using a modified control value (a+ε) 98. Accordingly, the reinforcement learning algorithm may explore whether improved results may be obtained, such as reaching a predefined destination at shorter time periods or at a reduced energy consumption. Based on a reward system, the parameter vector $\theta_\mu$ describing the weight distribution within the deep neural network 62 may be updated accordingly.

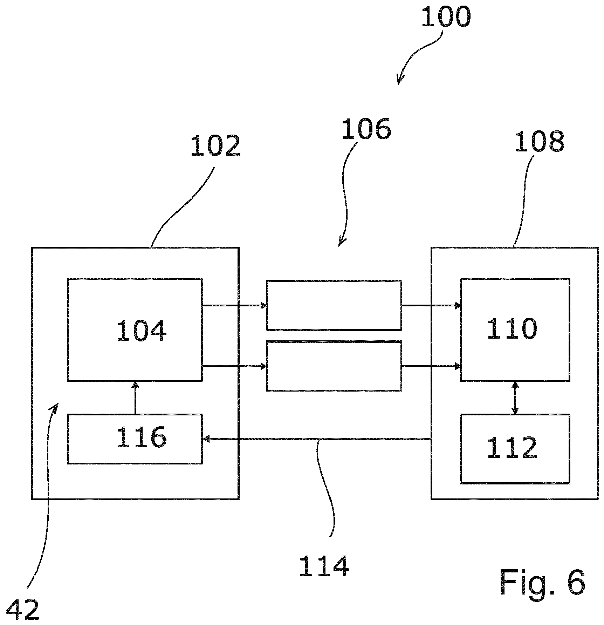

Figure 6 is a schematic drawing of the high-level feedback control system 100 of an autonomous vehicle 50. A vehicle main control unit 102 of the feedback control system 100 comprises a virtual driver 104, which may be considered an algorithm for autonomously driving the vehicle 50 within this context. The virtual driver 104 determined setpoints for actuators 106 which are configured to influence a motion of the vehicle 50, such as a vehicle speed control system or a vehicle steering control system. The setpoints are provided to the actuators using the determined control values (a) 88. Accordingly, actual speeds or motion depending properties, such as a position will occur. Of course, the actual values may deviate from the setpoints due to influences caused by the road environment 108. Accordingly, the actual motion dependent properties are sensed using sensing devices 110. Moreover, the properties of other vehicles 112 arranged within an environment of the ego vehicle 50 are sensed as well. The measured data 114 are forwarded to a sensor data processing circuit 116 included within the vehicle main control unit 102. Accordingly, the state (s) 42 of the vehicle may be determined comprising information with regard to the vehicle 50 itself but as well with regard to the road environment and other vehicles 112 arranged within the environment of the ego vehicle 50.

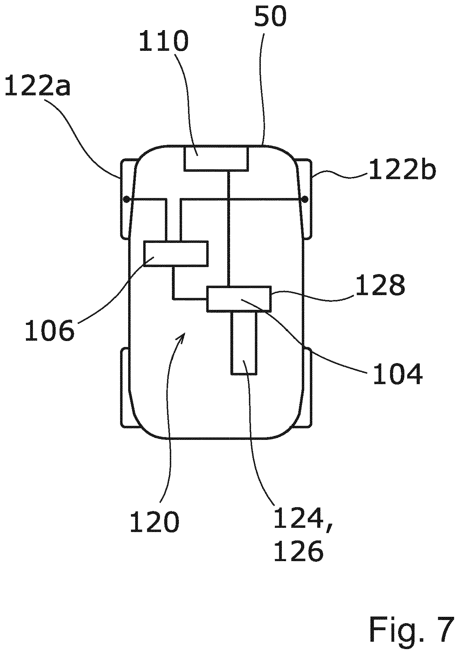

Figure 7 is a schematic drawing of a vehicle 50 comprising an autonomous driving system 120. The virtual driver 104 is coupled to an actuator 106 for influencing a motion of the vehicle 50 and to a sensing device 110 for detecting properties of the vehicle 50 with regard to its environment 52 as well as of other vehicles arranged within the environment 52. For example, the actuator 106 may adjust a speed by controlling wheels 122A, 122B of the vehicle 50.

Optionally the autonomous driving system 120 may also be included in a computer program 126 stored on a computer-readable medium 124. The program code may then be executed by a data processing circuit 128 included within the virtual driver 104. Certain embodiments disclosed herein, particularly the respective module(s), utilize circuitry (e.g., one or more circuits) in order to implement standards, protocols, methodologies or technologies disclosed herein, operably couple two or more components, generate information, process information, analyse information, generate signals, encode/decode signals, convert signals, transmit and/or receive signals, control other devices, etc. Circuitry of any type can be used.

In an embodiment, circuitry such as the data processing circuit includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

Although the disclosure has been illustrated and described with respect to one or more implementations, equivalent alterations and modifications will occur to others skilled in the art upon the reading and understanding of this specification and the annexed drawings. In addition, while a particular feature of the disclosure may have been disclosed with respect to only one of several implementations, such feature may be combined with one or more other features of the other implementations as may be desired and advantageous for any given or particular application.

### Claims

1. A method (10) for autonomous driving of a vehicle (50), the vehicle (50) comprising at least one sensing device (110) and at least one movement controller (106), wherein the movement controller (106) is configured for influencing a movement of the vehicle (50) if at least one control value (88) is provided to the movement controller (106), wherein the method comprises at least the following steps:

   S1 determining at least one state (42) of the vehicle (50) based at least on data acquired, with a sensing device (110), with respect to an environment (52) of the vehicle (50);
   S2 determining, using a deep neural network (62), at least one normalized action (70) for the at least one movement controller (106) of the vehicle (50) based on a bounded activation function, wherein the bounded activation function is configured to limit the at least one normalized action (70) with respect to the at least one state (42) of the vehicle (50); and
   S3 mapping the at least one normalized action (70) to at least one control value (88) using a bound extraction function (82), wherein the bound extraction function (82) is configured to provide at least one upper bound (84B) and at least one lower bound (84A) based on the state (42) of the vehicle (50) to limit the at least one control value (88) such that a movement of the vehicle (50) upon providing the at least one control value (88) to the at least one movement controller (106) of the vehicle (50) is limited.

2. The method (10) according to claim 1, wherein the method further comprises:

S4 determining a reliable exploration regime (94) for the deep neural network (62) based on at least a continuous probability distribution (96), wherein the continuous probability distribution (96) is determined taking into account the at least one upper bound (84B) and the at least one lower bound (84A) provided by the bound extraction function (82).

3. The method (10) according to any of the preceding claims, wherein the method further comprises:

S5 training the deep neural network (62) using at least one reinforcement learning algorithm including associated data based on the reliable exploration regime (94), wherein the associated data comprises the at least one determined state (42) of the vehicle (50) and the at least one determined normalized action (70) for the at least one movement controller (106) of the vehicle (50) dependent thereon; or wherein the associated data comprises the at least one determined state (42) of the vehicle (50) and the at least one determined control value (88) dependent thereon.

4. The method (10) according to any one of the preceding claims, wherein the method further comprises:

S0-1 acquiring, with the sensing device (110), data with respect to the environment (52) of the vehicle (50);
S0-2 acquiring, with the sensing device (110), data of vehicles (78) arranged within an environment (52) of the vehicle (50) and relative thereto;
S0-3 determining at least one state (42) of the vehicle (50) based on at least the data acquired with respect to the environment (52) of the vehicle (50) and data acquired with respect to vehicles (78) arranged within the environment (52) of the vehicle (50) and relative thereto.

5. The method (10) of claim 4, wherein the method further comprises:

S0-4 determining at least one speed setpoint and/or position setpoint for the at least one movement controller (106) of the vehicle (50) based on the determined state (42) of the vehicle (50).

6. The method (10) according to claim 5, wherein the at least one speed setpoint is determined based on a threat assessment algorithm to be limited between a lower bound speed setpoint and an upper bound speed setpoint, and/or wherein the at least one setpoint for a position of the vehicle (50) is determined based on the threat assessment algorithm to be limited between a lower bound position setpoint and an upper bound position setpoint.

7. The method (10) according to claim 6, wherein the lower bound speed setpoint is zero, wherein the upper bound speed setpoint is based on a velocity difference and a gap between the vehicle (50) and a nearest vehicle located in front of the vehicle (50), and/or
wherein a lower bound position setpoint is based on a minimum available lateral clearance with respect to the vehicle (50), wherein the minimum available lateral clearance is determined taking data into account being acquired with respect to vehicles (78) arranged within the environment (52) of the vehicle (50) and relative thereto.

8. A data processing circuit (128) comprising means for carrying out at least the steps S1 to S3 of the method (10) of any of the claims 1 to 7.

9. A computer program (126) comprising instructions which, when the program is executed by a computer, cause the computer to carry out at least the steps S1 to S3 of the method (10) according to any of the claims 1 to 7.

10. A computer-readable medium (124) comprising instructions which, when executed by a computer, cause the computer to carry out at least the steps S1 to S3 of the method (10) according to any of the claims 1 to 7.

**Amended claims in accordance with Rule 137(2) EPC.**

1. A method (10) for autonomous driving of a vehicle (50), the vehicle (50) comprising at least one sensing device (110) and at least one movement controller (106), wherein the movement controller (106) is configured for influencing a movement of the vehicle (50) if at least one control value (88) is provided to the movement controller (106), wherein the method comprises at least the following steps:

S1 determining at least one state (42) of the vehicle (50) based at least on data acquired, with a sensing device (110), with respect to an environment (52) of the vehicle (50);

S1-1 determining at least one normalized state (46) of the vehicle (50) based at least on the at least one state (42) of the vehicle (50), wherein the environment (52) of the vehicle (50) is predefined and comprises a certain area surrounding the vehicle (50), wherein with regard to the normalized state (46) information concerning an area outside the predefined environment (52) is neglected, and wherein the environment (52) is different based on a general traffic scenario;

S2 determining, using a deep neural network (62), at least one normalized action (70) for the at least one movement controller (106) of the vehicle (50) based on a bounded activation function, wherein the bounded activation function is configured to limit the at least one normalized action (70) with respect to the at least one normalized state (46) of the vehicle (50), wherein the normalized action (70) is limited to a predefined interval based on a mapping policy described by the bounded activation function applied to the determined normalized state (46); and

S3 mapping the at least one normalized action (70) to at least one control value (88) using a bound extraction function (82), wherein the bound extraction function (82) is configured to provide at least one upper bound (84B) and at least one lower bound (84A) based on the state (42) of the vehicle (50) to limit the at least one control value (88) such that a movement of the vehicle (50) upon providing the at least one control value (88) to the at least one movement controller (106) of the vehicle (50) is limited, wherein the method further comprises:

S4 determining a reliable exploration regime (94) for the deep neural network (62) based on at least a continuous probability distribution (96), wherein the continuous probability distribution (96) is determined taking into account the at least one upper bound (84B) and the at least one lower bound (84A) provided by the bound extraction function (82).

2. The method (10) according to claim 1,
   wherein the method further comprises:
   S5 training the deep neural network (62) using at least one reinforcement learning algorithm including associated data based on the reliable exploration regime (94), wherein the associated data comprises the at least one determined state (42) of the vehicle (50) and the at least one determined normalized action (70) for the at least one movement controller (106) of the vehicle (50) dependent thereon; or
   wherein the associated data comprises the at least one determined state (42) of the vehicle (50) and the at least one determined control value (88) dependent thereon.

3. The method (10) according to any one of the preceding claims, wherein the method further comprises:

   S0-1 acquiring, with the sensing device (110), data with respect to the environment (52) of the vehicle (50);
   S0-2 acquiring, with the sensing device (110), data of vehicles (78) arranged within an environment (52) of the vehicle (50) and relative thereto;
   S0-3 determining at least one state (42) of the vehicle (50) based on at least the data acquired with respect to the environment (52) of the vehicle (50) and data acquired with respect to vehicles (78) arranged within the environment (52) of the vehicle (50) and relative thereto.

4. The method (10) of claim 3, wherein the method further comprises:
   S0-4 determining at least one speed setpoint and/or position setpoint for the at least one movement controller (106) of the vehicle (50) based on the determined state (42) of the vehicle (50).

5. The method (10) according to claim 4, wherein the at least one speed setpoint is determined based on a threat assessment algorithm to be limited between a lower bound speed setpoint and an upper bound speed setpoint, and/or wherein the at least one setpoint for a position of the vehicle (50) is determined based on the threat assessment algorithm to be limited between a lower bound position setpoint and an upper bound position setpoint.

6. The method (10) according to claim 5, wherein the lower bound speed setpoint is zero, wherein the upper bound speed setpoint is based on a velocity difference and a gap between the vehicle (50) and a nearest vehicle located in front of the vehicle (50), and/or
   wherein a lower bound position setpoint is based on a minimum available lateral clearance with respect to the vehicle (50), wherein the minimum available lateral clearance is determined taking data into account being acquired with respect to vehicles (78) arranged within the environment (52) of the vehicle (50) and relative thereto.

7. A data processing circuit (128) comprising means for carrying out at least the steps S1 to S4 of the method (10) of any of the claims 1 to 6.

8. A computer program (126) comprising instructions which, when the program is executed by a computer, cause the computer to carry out at least the steps S1 to S4 of the method (10) according to any of the claims 1 to 6.

9. A computer-readable medium (124) comprising instructions which, when executed by a computer, cause the computer to carry out at least the steps S1 to S4 of the method (10) according to any of the claims 1 to 6.

Fig. 1

Fig. 2

Fig. 3

Fig. 4

Fig. 5

Fig. 6

Fig. 7

Europäisches
Patentamt

European
Patent Office

Office européen
des brevets

# EUROPEAN SEARCH REPORT

Application Number

EP 22 15 1063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BROSOWSKY MATHIS ET AL: "Safe Deep Reinforcement Learning for Adaptive Cruise Control by Imposing State-Specific Safe Sets", 2021 IEEE INTELLIGENT VEHICLES SYMPOSIUM (IV), IEEE, 11 July 2021 (2021-07-11), pages 488-495, XP034006185, DOI: 10.1109/IV48863.2021.9575258 [retrieved on 2021-10-14] * Sections I-IV * | 1-10 | INV. G06N3/00 B60W30/18 B60W60/00 G06N3/04 |
| A | US 10 990 096 B2 (HONDA MOTOR CO LTD [JP]) 27 April 2021 (2021-04-27) * column 7, line 21 - column 7, line 47 * | 1-10 | |
| A | LI ZHAOJIAN ET AL: "Safe Reinforcement Learning: Learning with Supervision Using a Constraint-Admissible Set", 2018 ANNUAL AMERICAN CONTROL CONFERENCE (ACC), AACC, 27 June 2018 (2018-06-27), pages 6390-6395, XP033386999, DOI: 10.23919/ACC.2018.8430770 [retrieved on 2018-08-09] * Section I-IV * | 1-10 | TECHNICAL FIELDS SEARCHED (IPC) G06N B60W |

The present search report has been drawn up for all claims

| Place of search | Date of completion of the search | Examiner |
|---|---|---|
| The Hague | 6 July 2022 | Targon, Valerio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 1063

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2022

| Patent document cited in search report | Publication date | Patent family member(s) | Publication date |
|---|---|---|---|
| US 10990096 B2 | 27-04-2021 | NONE | |

EP 4 209 963 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9977430 B2
- CN 106157650 A
- CN 110562258 A
- CN 109598934 A